# EUROPÄISCHE PATENTSCHRIFT

(11) **EP 0 758 437 B1**
(45) Veröffentlichungstag und Bekanntmachung des Hinweises auf die Patenterteilung: **02.06.1999**
(21) Anmeldenummer: 96905785.0
(22) Anmeldetag: 23.02.1996
(51) Int. Cl.: F16L 55/165, E21B 7/30

(54) **VERFAHREN ZUR VOR-ORT-ERNEUERUNG VON IM ERDREICH VERLEGTEN ROHRLEITUNGEN**
IN SITU METHOD OF RENEWING PIPES LAID IN THE GROUND
TECHNIQUE DE REMPLACEMENT IN SITU DE CANALISATIONS POSEES DANS LE SOL

(30) Priorität: 04.03.1995 DE 19507702
(43) Veröffentlichungstag der Anmeldung: 19.02.1997
(73) Patentinhaber: Töpler, Werner, 02828 Görlitz (DE)
(72) Erfinder: Töpler, Werner, 02828 Görlitz (DE)
(86) Internationale Anmeldenummer: EP9600753
(87) Internationale Veröffentlichungsnummer: WO9627753

(56) Entgegenhaltungen:
- EP-A- 0 379 707
- WO-A-91/13283
- US-A- 5 127 481

## Beschreibung

Es ist bekannt, z.B. defekte Abwasserleitungen dadurch zu erneuern, daß sie durch Aufschachten freigelegt und gegen neue ausgetauscht werden.
Aus der Literaturstelle 3R international (1991) 9, 495 bis 499 ist ein Verfahrensüberblick zur grablosen Verlegung und Erneuerung von Leitungen zu entnehmen.

In US-A- 5127481 und WO-A-9113283 werden 2 Verfahren beschrieben, mit denen mittels konischer Berstkörper, bei US-A-5127481 zusätzlich mit Schneiden versehen, die vorhandenen Rohrleitungen von innen heraus zerstört und durch Einzug neuer Leitungen ersetzt werden. Beiden Verfahren ist gemeinsam, daß die alte Rohrleitung unkontrolliert zerstört wird, daß in die alte, zerstörte Rohrleitung ein neues, nicht vor Ort gefertigtes Rohr eingezogen wird, daß die Anlagen keine Justiereinrichtungen besitzen, daß es nicht möglich ist, einzelne Rohrabschnitte zu erneuern, daß Rohreinbindungen nicht ausgespart bzw. gesondert behandelt werden können, daß sie nur eingesetzt werden können, wenn Schächte im Bereich von Rohreinbindungen mit aufgeweitet werden. Aufgabe der vorliegenden Erfindung ist es, ein einfaches aber sicheres Verfahren anzugeben um im Erdreich verlegte Rohrleitungen, ohne diese von außen freizulegen, zu erneuern. Eine vorteilhafte Anwendung der aufgezeigten Lösung liegt darin, daß z.B. unter Straßen verlegte Rohrleitungen ohne Straßenaufbrüche erneuert werden können.

Anhand eines Ausführungsbeispieles wird die Erfindung in der Folge näher erläutert. Die vorhandene Rohrleitung wird segmentweise von innen radial und axial, z.B. durch Schleifen, Sägen, Fräsen, mit Laser- oder Elektronenstrahl, Wasserstrahl oder anders, entspechend dem Arbeitsfortschritt, eingekerbt bzw. durchtrennt.
Anschließend wird das vorhandene Rohr innenwandberührend mit Blech oder anderen Stoffen fortlaufend ausgekleidet.
Nach dem Auskleiden wird entsprechend den durch das Einkerben vorgegebenen Segmenten mit geeigneten Geräten, mit z.B. Druck, Schlag, Rütteleinrichtung, explosiv usw., die vorhandene Rohrleitung materialzerstörend aufgeweitet, wobei die erzeugte Kraft örtlich gegen die Auskleidung geführt wird.
In der aufgeweiteten Auskleidung wird das neue Rohr, aus z.B. Kunststoff oder anderen Stoffen, fortlaufend, durch z.B. Verkleben, Vulkanisieren, Verschweißen,
Spritzen oder auf andere Art vor Ort, das heißt, innerhalb der Rohrleitung hergestellt.

Vorteile dieses Verfahrens sind darin zu sehen, daß der ursprüngliche Rohrinnendurchmesser wieder hergestellt werden kann, daß die alte Rohrleitung im Erdreich verbleibt und daß kein Abraum transportiert werden muß.

## Patentansprüche

1. Verfahren zur Vor-Ort-Erneuerung von im Erdreich verlegten Rohrleitungen wobei das zu erneuernde Rohr von innen segmentweise radial und axial eingekerbt oder durchgetrennt wird,
anschfießend das vorhandene Rohr an der Innenwand fortlaufend eine Hilfsauskleidung erhält,
nach dem Auskleiden die Rohrleitung von innen durch die Hilfsauskleidung segmentweise fohrmaterialzerstörend aufgeweitet wird,
danach die neue Rohrleitung innerhalb der alten, aufgeweiteten Leitung vor Ort hergestellt wird, so daß der ursprüngliche Rohrinnendurchmesser sowie das ursprüngliche Sohlenniveau der Rohrleitung wieder hergestellt werden können.

2. Verfahren nach Anspruch 1, wobei die zu erneuernde Rohrleitung nicht von außen, außer über vorhandene Schächte, zugänglich sein muß.

## Claims

1. A method of in-situ revamping of buried pipelines,
wherein segments of the pipe to be revamped will be radially and axially notched and cut from within,
whereafter the existing pipe will continuously be lined provisionally,
wherein the pipeline, after having been lined, will be widened from within through the auxiliary lining while destroying the pipe material segment by segment,
wherein the new pipeline will be established in situ inside the widened original pipeline so that both the original pipe diameter and the original bottom level can be restored.

2. A method as claimed in Claim 1,
wherein the pipeline to be revamped need not be accessible from without, except via existing shafts.

## Revendications

1. Une méthode de remplacement in situ des pipe-lines mis en terre,
en entaillant et coupant radialement et axialement le tuyau à remplacer de l'intérieur par segments,
en suite, en fournissant progressivement un revêtement auxiliaire à l'intérieur du tuyau existant,
et, après en avoir revêtu l'intérieur du tuyau, en élargissant le tuyau de l'intérieur par le revêtement auxiliaire en détruisant le matériel du tuyau par segments,
en suite, en posant in situ le nouveau tuyau à l'intérieur de l'ancien pipe-line ainsi élargi si bien que le diamètre intérieur original du tuyau et le niveau original du fond peuvent être rétablis.

2. Une méthode selon revendication 1,
impliquant que le pipe-line à remplacer ne doit être accessible de l'extérieur saufpar voie des puits existants.
